# EUROPEAN PATENT APPLICATION

(11) **EP 2 306 360 A1**
(43) Date of publication of application: **06.04.2011**
(21) Application number: 09275074.4
(22) Date of filing: 09.09.2009
(51) Int. Cl.: G06F 21/00, G06F 3/023

(54) **Secure KVM switch**

(71) Applicant: BAE Systems PLC, 6 Carlton Gardens London SW1Y 5AD (GB)
(72) Inventor: The designation of the inventor has not yet been filed
(74) Representative: McBrien, Matthew Nicholas

(57) **Abstract**

A secure switch assembly for controlling first and second computers using a common keyboard and a common mouse is provided. The switch assembly comprises a secure controller together with first and second switching elements.

The secure controller comprises receiving means, configured to receive a selection signal from a user, determining means configured to determine whether the selection signal represents a single, coherent selection and transmitting means configured to emit first and second enabling signals.

The first switching element is associated with a first computer and is configured to receive a signal indicative of a mouse instruction from a mouse, a signal indicative of a keyboard instruction from a keyboard and a first enabling signal from the secure controller.

The second switching element is also associated with the first computer and is configured to receive a signal indicative of a mouse instruction from the first switching element, a signal indicative of a keyboard instruction from the first switching element and a second enabling signal from the secure controller.

The first and second switching elements are configured to enable transmission of the mouse and keyboard instructions therethrough if both the first and second enabling signals are respectively received.

The first and second computers are effectively isolated by the first and second switching elements and thereby effect assurance to a high grade.

## Description

The present invention relates to the field of secure switches, in particular those for controlling operation of two or more computers using a common keyboard, video display and mouse.

In a system comprising a number of separate computers controlled by a single user it is desirable to enable that user to control each computer from a single keyboard, video display and mouse. This is conventionally achieved by use of a keyboard, video, mouse (KVM) switch. Control is typically switched between computers through activation of a hot key sequence from the keyboard and is driven by software programmed into the switch.

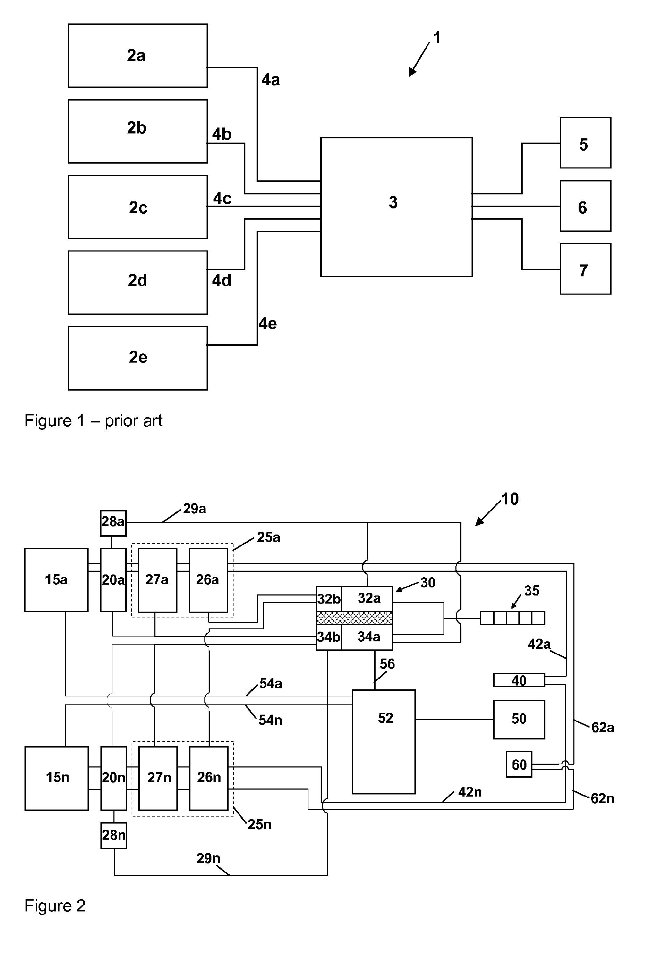

Each computer is generally hard wired into the switching device. Figure 1 illustrates a computer system 1 comprising five computers 2a, 2b, 2c, 2d, 2e each connected to a KVM switching device 3 using cables 4a, 4b, 4c, 4d, 4e. A single keyboard 5, video display 6 and mouse 7 are each connected to the KVM switch 3 and are used to control each respective computer 2a-e.

In operation, a particular computer, say 2b is selected, through some predetermined sequence of keyboard strokes originating at the keyboard 5. Signals are then routed between the input and display devices 5, 6, 7 through KVM switch 3 to and from the chosen computer, 2b. When it is necessary to control an alternative computer, say 2e, a corresponding sequence of keyboard strokes are applied at the keyboard 5 and the routing is altered within the KVM switch 3 so that communication between the computer 2e and the input and display devices 5, 6, 7 is effected.

However, it may be necessary to isolate the computers 2a-e from one another, e.g. if each computer is handling data with a different level of protective marking (i.e. security level). Under these circumstances each hard wire link (e.g. cables 4a to 4e) between the computers and the KVM switch is considered to represent a potential path of transfer of information and, therefore, represents a security risk. In order to prevent transfer of information along any such paths, it is necessary to substantially physically separate the paths to prevent leakage there between and thereby effect assurance to a high grade.

It is, therefore, desirable to develop a system having the flexibility of the conventional KVM switch whilst restricting transfer of data both to and between computers.

According to a first aspect, the present invention provides a secure switch assembly for controlling first and second computers using a common keyboard and a common mouse, the switch assembly comprising:
a secure controller comprising:
   receiving means configured to receive a selection signal from a user;
   determining means configured to determine whether the selection signal represents a single coherent selection; and
   transmitting means configured to emit first and second enabling signals;
a first switching element, associated with a first computer, configured to receive a signal indicative of a mouse instruction from a mouse, a signal indicative of a keyboard instruction from a keyboard and a first enabling signal from the secure controller; and
a second switching element, associated with the first computer, configured to receive a signal indicative of a mouse instruction from the first switching element, a signal indicative of a keyboard instruction from the first switching element and a second enabling signal from the secure controller, wherein the first and second switching elements are configured to enable transmission of the mouse and keyboard instructions if both the first and second enabling signals are respectively received.

By providing a secure switch having dedicated switching means associated with each respective computer, a data path between the common inputs, represented by a keyboard and a mouse, and each respective computer can effectively be isolated and thereby effect assurance to a high grade. In so doing, the risk associated with potential data transfer between the computers is reduced.

According to a second aspect, a secure system may be provided, the system may comprise a secure switch assembly of the aforementioned type, together with an emulation device, associated with the first computer, for emulating the presence of a keyboard and a mouse, the emulation device being connected to the second switching element and being configured to receive a signal indicative of a mouse instruction from the second switching element, a signal indicative of a keyboard instruction from the second switching element and a first or second enabling signal from the secure controller.

The system may comprise an assessor, associated with the emulation device, for assessing a status of the emulation device, configured to transmit a signal indicative of the status to the secure controller. The system may comprise first and second computers together with a secure switch, the switch may comprise first and second switching elements associated with each respective computer, each computer may be connected to a respective second switching element and may be configured to receive instructions therefrom.

The system may comprise a keyboard and a mouse for receiving instructions from a user of the system and for supplying said instructions to the first or the second computer via the secure switch assembly. The system may comprise a video display for displaying data received from the first or the second computer, data may be received by the video display from an enabled computer via a video multiplexer device but no data may be transferred to the video multiplexer device from the video display. Thus a so called "data diode" may be effected.

The system may comprise a selector, configured to receive an instruction from a user of the system, indicative of which computer is to be controlled by the common keyboard and the common mouse. The selector may be configured to generate the selection signal, indicative of the received instruction, and to transmit the selection signal to the secure controller.

According to a third aspect, the present invention provides a method for controlling first and second computers using a common keyboard and a common mouse using a secure switch assembly, the assembly comprising a secure controller and a secure switch associated with each respective computer, each secure switch comprising first and second switching elements, the method comprising the steps of:
receiving a selection signal at the secure controller from a selector, the selection signal being indicative of a computer to be controlled;
determining whether the selection signal represents a single coherent selection;
generating first and second enabling signals, dependent on the determining step;
transmitting the first and second enabling signals from the secure controller to respective first and second switching elements associated with the computer to be controlled;
receiving, at the first switching element, instructions from the common mouse and the common keyboard and the first enabling signal from the secure controller;
receiving, at the second switching element, the instructions from the first switching element and the second enabling signal from the secure controller; and
transmitting the instructions through first and second switching elements to the computer selected to be controlled.

The selection signal may be separately received by first and second components of the secure controller, each component may separately determine whether the selection signal represents a single, coherent selection and may, subsequently, generate respective first and second enabling signals dependent on the respective determining steps. The selection signal may comprise two independently generated signals, one being transmitted to each of the first and second components of the secure controller.

The invention will now be described in detail, by way of example only and with reference to the accompanying drawings in which:
Figure 1 illustrates a computer system using a conventional KVM switch; and
Figure 2 illustrates a computer system using a secure KVM switch.
Figure 2 illustrates a secure computer system 10 comprising a plurality of computers 15ᵢ, only two computers 15ₐ, 15ₙ are illustrated in this example for clarity.
Each computer 15ᵢ has associated therewith a dedicated keyboard and mouse emulation device 20ᵢ. The emulation device 20ᵢ serves to interpret incoming signals, indicating a presence or absence of genuine keyboard/mouse instructions, and to provide the computer 15ᵢ with an apparent constant presence of a keyboard and a mouse when they are actually absent, to encourage smooth functioning of the computer 15ᵢ.

A dedicated, secure keyboard and mouse switch 25ᵢ is located in line with each emulation device 20ᵢ. Each switch 25ᵢ is connected, in turn, to a central secure controller 30 and works in combination therewith to enable or disable the corresponding computer 15ᵢ. The combination of the, or each, secure switch 25ᵢ and the secure controller 30 may also be referred to as a secure switch assembly. The secure controller 30 is configured to receive signals from a selector 35 and, thereby, to ascertain and to govern which computer 15ᵢ is to be controlled by a user of the system 10. The selector 35 is independent from a keyboard 40 connected to the system i.e. isolated from keyboard instructions issued therefrom.

Each respective secure switch 25ᵢ comprises first and second elements 26ᵢ, 27ᵢ through which data must pass before being received by the computer 15ᵢ. Each element 26ᵢ, 27ᵢ is configured to receive a signal from each of the keyboard 40 and the mouse 60 together with an enabling signal from the secure controller 30. Unless a respective enabling signal is received by an element 26ᵢ, 27ᵢ, data from the keyboard 40 and mouse 60 may not pass therethrough. Consequently, for data to be transmitted through secure switch 25ᵢ to the computer 15ᵢ, each element 26ᵢ, 27ᵢ must receive an enabling signal from the secure controller 30. If either one of the elements 26ᵢ, 27ᵢ fails to receive its respective enabling signal, data transfer is prevented.

The computer 15ᵢ may be quite sensitive in that it may seize if the user attempts to switch to another computer, say 15n, whilst data packets are being transmitted through the emulation device 20ᵢ. It is, therefore, beneficial to ensure that the emulation device 20ᵢ is clear of any data packets when switching from one computer 15ᵢ to another 15ₙ. In this embodiment, a "busy line" assessor 28ᵢ is incorporated in a dedicated line 29ᵢ extending between each emulation device 20ᵢ and the secure controller 30. The assessor 28ᵢ determines whether data packets are being transmitted through the emulation device 20ᵢ at any particular instant. A status of the emulation device 20ᵢ is fed back to the secure controller 30, to enable check logic contained therein to ensure that no data packets are being transmitted through the emulation device 20ᵢ as switching between computers 15 is effected. Hence, seizing of the computer 15ᵢ due to this sensitivity is avoided.

The secure controller 30 comprises two substantially similar components 32, 34 for independently confirming the user's selection of computer to be controlled by the remote keyboard 40 and mouse 60. Each component 32, 34 comprises two portions 32a, 32b, 34a, 34b. Each portion is configured to receive a signal, decode the signal and ensure that only a single, consistent enabling signal (representing a single computer, say 15ₐ) is output therefrom to confirm the user's selection intention. The secure controller 30, thus serves to determine whether a selection signal, generated by the selector 35, represents a single, coherent selection from the user. More detail is given below.

The user of the system 10 is presented with a single keyboard 40, video display 50 and mouse 60 in addition to the selector 35. The keyboard 40 and mouse 60 are each configured to supply an input line 42ᵢ, 62ᵢ to each computer 15ᵢ respectively. The video display 50 is provided in communication with a video multiplexer device 52, which, in turn, is configured to receive a series of output lines 54ᵢ from each respective computer 15ᵢ.

A conventional video device undertakes two way traffic with a computer as information is not only sent to a screen to be displayed but also information is passed from the screen to the computer e.g. to indicate the type and resolution of the screen. In order to replace such a two way communication with a uni-directional route, to thereby inhibit transfer of data from the video display 50, display information (such as resolution of the video display device 50) is fixed within the architecture. By hard wiring this information, a requirement for a feedback loop is eliminated and one way data transfer can be established.

The video multiplexer device 52 is configured to receive an enabling signal from the secure controller 30 through line 56 to identify which of the output lines 54ᵢ should be active. Only a single line 54ᵢ is activated at any one time, the active line corresponds to the particular computer 15ᵢ selected by the user.

In operation, the user is currently communicating with a computer, say 15ᵢ, and the user selects an alternative computer, say 15ₐ, with which he now wishes to communicate by physically selecting a corresponding option on the hard wired selector 35. In this example, two signals X and Y indicating this selection are then generated and transmitted by the selector 35 and are received by the secure controller 30.

A first portion 32a of a first component 32 of the controller 30 receives and decodes a first signal (say X) from the user. The first portion 32a also receives an output from assessor 28ᵢ to indicate whether any data packets are passing through the emulation device 20ᵢ associated with the current computer 15ᵢ. If no such data packets are being transmitted, the decoded signal X' is transmitted to a second portion 32b of the secure controller 30 to indicate which computer 15ₐ has been selected. The second portion 32b then confirms that only a single computer 15a has been selected. The signal X' represents a number of "lines" each of which may be "high" or "low". In this example, a single "high" indicates that just one computer 15ₐ is to be activated. Alternatively, a negative logic could be implemented whereby a single "low" indicates that just one computer 15ₐ is to be activated.

If the selected computer 15ₐ is different from the currently enabled computer 15ᵢ, switching element 26ᵢ, associated with the currently enabled computer 15i, is disabled and switching element 26ₐ, associated with the newly selected computer 15ₐ, is enabled.

Substantially simultaneously, a second portion 34a of a second component 34 of the controller 30 receives and decodes a second signal (say Y) from the user. The second portion 34a also receives an output from assessor 28ᵢ to indicate whether any data packets are passing through the emulation device 20ᵢ associated with the current computer 15ᵢ. If no such data packets are being transmitted, the decoded signal Y' is transmitted to a second portion 34b of the secure controller 30 to indicate which computer 15ₐ has been selected. The second portion 34b then confirms that only a single computer 15ₐ has been selected. The signal Y' represents a number of "lines" each of which may be "high" or "low". As described earlier, a single "high" (or a single "low") indicates that just one computer 15ₐ is to be activated.

If the selected computer 15ₐ is different from the currently enabled computer 15ᵢ, switching element 27ᵢ, associated with the currently enabled computer 15ᵢ, is disabled and switching element 27ₐ, associated with the newly selected computer 15_{a,} is enabled.

In this example, two independent signals X and Y are generated by the selector 35. In an alternative embodiment, a single, combined signal XY may be generated. The combined signal may have two components X, Y. The first portion 32a checks that component Y is within a valid range and then that component X is also within a valid range before acting upon the component X. Meanwhile, the other first portion 34a checks that component X is within a valid range and then that Y is within the valid range before acting upon the component Y.

In a more sophisticated embodiment, the single combined signal XY may have more complex characteristics. In this case, the first portions 32a, 34a and second portions 32b, 34b of the secure controller 30 are each configured to identify certain different parameters within the combined signal XY or the decoded combined signal XY'.

In either embodiment, it should be noted that there is no consistency check, as such, between the first and second components 32, 34 of the secure controller 30. Rather, such a check is inherent in the process as the final activation of the selected computer 15ₐ is only permitted once each switching element 26ₐ and 27ₐ associated with the selected computer 15ₐ is independently activated by the secure controller 30.

In summary, if the signals X, Y received by the secure controller 30 are consistent (representing a single selected computer 15ₐ) and the secure controller 30 is operating correctly, then both first and second elements 26ₐ, 27ₐ of the same secure switch 25ₐ receive respective enabling signals from the controller 30. Consequently, communication lines become active through the switch 25ₐ such that signals from the keyboard 40, via line 42ₐ, and from the mouse 60, via line 62ₐ, are conveyed to the newly selected computer 15ₐ. In contrast, if the signals X, Y received by the secure controller 30 are inconsistent (e.g. representing different selected computers 15ₐ, 15ₙ), a first element 26ₐ of one secure switch 25ₐ may be activated whilst a second element 27ₙ of a second, different, secure switch 25ₙ may be activated. Consequently, no communication from the keyboard 40 and the mouse 60 to either computer 15_{a,} 15ₙ is enabled.

In this embodiment, each secure switch 25 comprises two elements 26, 27 to correspond to the two components 32, 34 of the secure controller 30. However, in a more sophisticated embodiment, each secure switch 25 could comprise a greater number, say three or four elements, in which case the secure controller 30 comprises a corresponding number of components. Each element of a single secure switch 25 must receive an enabling signal from a corresponding component of the respective secure controller 30 in order to permit transmission of the keyboard and/or mouse instructions through the secure switch 25 to the computer 15. In a system comprising computers having different security requirements, the secure switches 25 may each have a different appropriate number of elements. If the system comprises computers representing different levels of protective marking a secure switch having two elements as illustrated is appropriate if the separation is represented by a difference in two or three levels of protective marking. If, however, the levels of protective marking rise to four or more or if a mixture of one, two, three and/or four levels separate the protective marking of the computers, then a system having three or more elements may be required.

In the embodiment illustrated in Figure 2, one of the components 34 of the secure controller 30 is also connected to the emulation device 20. Thus transfer of data through the emulation device 20 may also be subject to receiving an enabling signal. In this example, the enabling signal from the second component 34 is conveyed to the emulation device 20 and, thus, the transmission of data there through is permitted. Alternatively, a separate enabling signal from a third component of the secure controller 30 may be used.

One component 34 of the secure controller 30 also transmits an enabling signal to the multiplexer device 52 through output line 56 to identify the computer 15 from which the device 52 is to receive graphical information to be displayed on the video display 50. As described above, only a single port is enabled at any one time. The graphical information passed between the computer 15 and the video display 50 via the multiplexer device 52 comprises standard RGB channels together with vertical and horizontal synchronisation channels.

## Claims

1. A secure switch assembly for controlling first and second computers using a common keyboard and a common mouse, the switch assembly comprising:
a secure controller comprising:
receiving means configured to receive a selection signal from a user;
determining means configured to determine whether the selection signal represents a single coherent selection; and
transmitting means configured to emit first and second enabling signals;
a first switching element, associated with a first computer, configured to receive a signal indicative of a mouse instruction from a mouse, a signal indicative of a keyboard instruction from a keyboard and a first enabling signal from the secure controller; and
a second switching element, associated with the first computer, configured to receive a signal indicative of a mouse instruction from the first switching element, a signal indicative of a keyboard instruction from the first switching element and a second enabling signal from the secure controller, wherein the first and second switching elements are configured to enable transmission of the mouse and keyboard instructions if both the first and second enabling signals are respectively received.

2. A secure system comprising:
a secure switch assembly according to Claim 1; and
an emulation device, associated with the first computer, for emulating the presence of a keyboard and a mouse, the emulation device being connected to the second switching element and being configured to receive a signal indicative of a mouse instruction from the second switching element, a signal indicative of a keyboard instruction from the second switching element and a first or second enabling signal from the secure controller.

3. A system according to Claim 2, comprising an assessor, associated with the emulation device, for assessing a status of the emulation device, configured to transmit a signal indicative of the status to the secure controller.

4. A system according to Claim 2 or Claim 3, comprising:
first and second computers; and
a secure switch, the switch comprising first and second switching elements associated with each respective computer, each computer being connected to a respective second switching element and being configured to receive instructions therefrom.

5. A system according to Claim 4, comprising a keyboard and a mouse for receiving instructions from a user of the system and for supplying said instructions to the first or the second computer via the secure switch assembly.

6. A system according to Claim 5, wherein the system comprises a video display for displaying data received from the first or the second computer, wherein data is received by the video display from an enabled computer via a video multiplexer device but wherein no data is transferred to the video multiplexer device from the video display.

7. A system according to any of Claims 2 to 6, wherein the system comprises a selector configured to receive an instruction from a user of the system, indicative of which computer is to be controlled by the common keyboard and the common mouse.

8. A system according to Claim 7, wherein the selector is configured to generate the selection signal, indicative of the received instruction, and to transmit the selection signal to the secure controller.

9. A method for controlling first and second computers using a common keyboard and a common mouse using a secure switch assembly, the assembly comprising a secure controller and a secure switch associated with each respective computer, each secure switch comprising first and second switching elements, the method comprising the steps of:
receiving a selection signal at the secure controller from a selector, the selection signal being indicative of a computer to be controlled;
determining whether the selection signal represents a single coherent selection;
generating first and second enabling signals, dependent on the determining step;
transmitting the first and second enabling signals from the secure controller to respective first and second switching elements associated with the computer to be controlled;
receiving, at the first switching element, instructions from the common mouse and the common keyboard and the first enabling signal from the secure controller;
receiving, at the second switching element, the instructions from the first switching element and the second enabling signal from the secure controller; and
transmitting the instructions through first and second switching elements to the computer selected to be controlled.

10. A method according to Claim 9, whereby the selection signal is separately received by first and second components of the secure controller, each component separately determining whether the selection signal represents a single, coherent selection and, subsequently, generating respective first and second enabling signals dependent on the respective determining steps.

11. A method according to Claim 10, wherein the selection signal comprises two independently generated signals, one being transmitted to each of the first and second components of the secure controller.
